# EUROPEAN PATENT APPLICATION

(11) **EP 3 142 411 A1**
(43) Date of publication of application: **15.03.2017**
(21) Application number: 14891303.1
(22) Date of filing: 10.10.2014
(51) Int. Cl.: H04W 28/08

(54) **COMPETITION-BASED RESOURCE SELECTION METHOD AND DEVICE, AND COMPUTER STORAGE MEDIUM**

(30) Priority: 09.05.2014 CN 201410196583
(71) Applicant: ZTE Corporation, Shenzhen, Guangdong 518057 (CN)
(72) Inventor: WANG, Wenhuan, Shenzhen Guangdong 518057 (CN); YANG, Jin, Shenzhen Guangdong 518057 (CN); WU, Shuanshuan, Shenzhen Guangdong 518057 (CN); HUANG, Shuanghong, Shenzhen Guangdong 518057 (CN); YUAN, Ming, Shenzhen Guangdong 518057 (CN)
(74) Representative: Brevalex
(86) International application number: PCT/CN2014/088267
(87) International publication number: WO 2015/169050

(57) **Abstract**

Disclosed are a competition-based resource selection method and device. The method includes that: a first interception result is received in a (n+1)^{th} time domain unit, the first interception result at least including channel occupation information and/or collision information in a n^{th} time domain unit; and a time-frequency resource for data sending is selected according to the first interception result, where n is 0 or a positive integer. The present disclosure also discloses a computer storage medium.

## Description

### TECHNICAL FIELD

The present disclosure relates to a resource selection technology in the field of communications, and in particular to a competition-based resource selection method and device, and a computer storage medium.

### BACKGROUND

In the field of wireless communications, different devices usually occupy time-frequency resources based on a competition mechanism. The occupation of the time-frequency resources based on the competition mechanism will inevitably cause a resource occupation conflict. Specifically, for instance, in a half-duplex communication device, the device will intercept an occupation situation of each channel before sending data, and determine a channel and time for sending data according to an interception result. Pre-interception relieves a resource competition contradiction that a plurality of devices occupies the same channel to send data at the same time to a certain extent. However, it is discovered, in practice, that a competition conflict between the devices is still sharp and phenomena of resource occupation collisions frequently occur, so that information cannot be normally sent in time.

### SUMMARY

In view of this, the embodiments of the present disclosure are intended to provide a competition-based resource selection method and device, and a computer storage medium, so that phenomena of resource occupation collisions and reoccurrences can be reduced.

To this end, the technical solutions provided bythe embodiments of the present disclosure are implemented as follows.

According to a first aspect of the present disclosure, a competition-based resource selection method is provided, including that:
a first interception result is received in a (n+1)^{th} time domain unit, the first interception result at least including channel occupation information and/or collision information in a n^{th} time domain unit; and
a time-frequency resource for data sending is selected according to the first interception result,
where n is 0 or a positive integer.

Preferably, the method may further include that:
a second interception result is obtained by interception, the second interception result at least including channel occupation information and/or collision information in the (n+1)^{th} time domain unit, wherein
the step that the time-frequency resource for data sending is selected according to the first interception result includes that:
   the time-frequency resource for data sending is selected according to the first interception result and the second interception result.

Preferably, the method may further include that:
data is sent using the time-frequency resource,
wherein the data includes the second interception result.

Preferably,
the step that the first interception result is received in the (n+1)^{th} time domain unit may include that:
resource configuration information and control information are received in the (n+1)^{th} time domain unit; and
the first interception result is extracted from the resource configuration information and the control information.

Preferably,
the step that the time-frequency resource for data sending is selected according to the first interception result or according to the first interception result and the second interception result may include that:
vacant channels in a time domain unit following the (n+1)^{th} time domain unit are predicted according to the first interception result or according to the first interception result and the second interception result; and
a channel is selected for data sending from the vacant channels.

Preferably,
the step that the channel is selected for data sending from the vacant channels may include that:
a selective sequence is formed according to terminal attribute information and/or communication attribute information; and
a channel is selected for data sending from the vacant channels according to the selective sequence.

Preferably,
the terminal attribute information may include: an International Mobile Equipment Identity (IMEI) of a terminal and an International Mobile Subscriber Identity (IMSI) of the terminal; and
the communication attribute information may include: a Transmit Terminal Identity (Tx-UE ID), a Receive Terminal Identity (Rx-UE ID), a group ID, and a subframe number formed during start-up of a terminal or a randomly-formed random sequence.

Preferably, the step that the channel is selected for data sending from the vacant channels according to the selective sequence may include that:
modulus pre-computation is carried out according to the selective sequence and the vacant channels so as to obtain a modulus residual value; and
a vacant channel for data sending is selected according to a mapping relationship between the modulus residual value and the vacant channels.

Preferably,
the step that the time-frequency resource for data sending is selected according to the first interception result and the second interception result may include that:
when collision information in the first interception result or the second interception result shows that a resource occupation collision occurs, the time-frequency resource for data sending is selected according to a backoff policy, the first interception result and the second interception result.

Preferably,
the step that the time-frequency resource for data sending is selected according to the backoff policy, the first interception result and the second interception result may include that:
a time domain priority is determined according to serial numbers of frequency domain resources subjected to the resource occupation collision;
a time domain resource for respective data sending is determined according to the time domain priority and the size of a time domain backoff window;
   and/or
a frequency domain priority is determined according to an order of time domain resources subjected to the resource occupation collision; and
a frequency domain resource for respective data sending is determined according to the frequency domain priority and the size of a frequency domain backoff window.

According to a second aspect of the embodiments of the present disclosure, a competition-based resource selection method is provided, including that:
a time domain priority of each piece of data to be resent is determined according to serial numbers of frequency domain resources previously occupied by the data to be resent;
a time domain resource for sending each piece of data to be resent is determined according to the time domain priority and the size of a time domain backoff window;
   or
a frequency domain priority of each piece of data to be resent is determined according to an order of time domain resources previously occupied by the resent data to be resent;
a frequency domain resource for sending each piece of data to be resent is determined according to the frequency domain priority and the size of a frequency domain backoff window.

According to a third aspect of the embodiments of the present disclosure, a competition-based resource selection method is provided, including that:
vacant channels are determined;
a selective sequence is acquired; and
a vacant channel is selected according to the selective sequence.

Preferably, acquiring the selective sequence refers to: forming the selective sequence according to terminal attribute information and/or communication attribute information.

Preferably,
the terminal attribute information may include: an IMEI of a terminal and an IMSI of the terminal; and
the communication attribute information may include: a Tx-UE ID, an Rx-UE ID, a group ID, and a subframe number formed during start-up of a terminal or a randomly-formed random sequence.

Preferably, the step that the vacant channel is selected according to the selective sequence may include that:
modulus pre-computation is carried out according to the selective sequence and the vacant channels so as to obtain a modulus residual value; and
a vacant channel for data sending is selected according to a mapping relationship between the modulus residual value and the vacant channels.

According to a fourth aspect of the embodiments of the present disclosure, a competition-based resource selection device is provided, including:
a receiving unit, configured to receive a first interception result in a (n+1)^{th} time domain unit, the first interception result at least including channel occupation information and/or collision information in a n^{th} time domain unit; and
a selection unit, configured to select a time-frequency resource for data sending according to the first interception result,
where n is 0 or a positive integer.

Preferably, the device may further include:
an interception unit, configured to obtain a second interception result by interception, the second interception result at least including channel occupation information and/or collision information in the (n+1)^{th} time domain unit, wherein
the selection unit is further configured to select the time-frequency resource for data sending according to the first interception result and the second interception result.

Preferably, the device may further include:
a sending unit, configured to send data using the time-frequency resource,
wherein the data includes the second interception result.

Preferably,
the receiving unit may be configured to: receive resource configuration information or control information in the (n+1)^{th} time domain unit; and extract the first interception result from the resource configuration information or the control information.

Preferably,
the selection unit may be configured to: predict vacant channels in a time domain unit following the (n+1)^{th} time domain unit according to the first interception result or according to the first interception result and the second interception result; and select a channel for data sending from the vacant channels.

Preferably,
the selection unit may be configured to: form a selective sequence according to terminal attribute information and/or communication attribute information; and
select a channel for data sending from the vacant channels according to the selective sequence.

Preferably,
the terminal attribute information may include: an IMEI of a terminal and an IMSI of the terminal; and
the communication attribute information may include: a Tx-UE ID, an Rx-UE ID, a group ID, and a subframe number formed during start-up of a terminal or a randomly-formed random sequence.

Preferably, the selection unit may include:
a computation module, configured to carry out modulus pre-computation according to the selective sequence and the vacant channels so as to obtain a modulus residual value; and
a selection module, configured to select a vacant channel for data sending according to a mapping relationship between the modulus residual value and the vacant channels.

Preferably,
the selection unit may be configured to select, when collision information in the first interception result or the second interception result shows that a resource occupation collision occurs, the time-frequency resource for data sending according to a backoff policy, the first interception result and the second interception result.

Preferably,
the selection unit may be configured to: determine a time domain priority according to serial numbers of frequency domain resources subjected to the resource occupation collision; determine a time domain resource for respective data sending according to the time domain priority and the size of a time domain backoff window;
and/or
determine a frequency domain priority according to an order of time domain resources subjected to the resource occupation collision; and
determine a frequency domain resource for respective data sending according to the frequency domain priority and the size of a frequency domain backoff window.

According to a fifth aspect of the embodiments of the present disclosure, a competition-based resource selection device is provided, including:
a first determination unit, configured to determine a time domain priority of each piece of data to be resent according to serial numbers of frequency domain resources previously occupied by the data to be resent, or determine a frequency domain priority of each piece of data to be resent according to an order of time domain resources previously occupied by the data to be resent; and
a second determination unit, configured to determine a time domain resource for sending each piece of data to be resent according to the time domain priority and the size of a time domain backoff window, or determine a frequency domain resource for sending each piece of data to be resent according to the frequency domain priority and the size of a frequency domain backoff window.

According to a sixth aspect of the embodiments of the present disclosure, a competition-based resource selection device is provided, including:
a third determination unit, configured to determine vacant channels;
an acquisition unit, configured to acquire a selective sequence; and
a fourth determination unit, configured to select a vacant channel according to the selective sequence.

Preferably,
the acquisition unit may be configured to form the selective sequence according to terminal attribute information and/or communication attribute information.

Preferably,
the terminal attribute information may include: an IMEI of a terminal and an IMSI of the terminal; and
the communication attribute information may include: a Tx-UE ID, an Rx-UE ID, a group ID, and a subframe number formed during start-up of a terminal or a randomly-formed random sequence.

Preferably, the fourth determination unit may be configured to: carry out modulus pre-computation according to the selective sequence and the vacant channels so as to obtain a modulus residual value; and select a vacant channel for data sending according to a mapping relationship between the modulus residual value and the vacant channels.

According to a seventh aspect of the embodiments of the present disclosure, a computer storage medium is provided. Computer executable instructions may be stored in the computer storage medium and may be configured to execute at least one of the methods provided according to the first aspect to the third aspect of the embodiments of the present disclosure. According to a competition-based resource selection method and device and a computer storage medium provided by the embodiments of the present disclosure, before sending data, a terminal receives a first interception result which is sent by other devices and contains occupation situation information and/or collision information. On one hand, the terminal may obtain a collision situation of each channel within subsequent time according to the first interception result, such that the probability of selection conflicts against resource sending of other terminals can be reduced, thereby aiding in normally sending data in time. On the other hand, the terminal receives the interception results sent by the other terminals and can properly decrease the number of self-intercepted time domain units, so that the power consumption can be reduced.

### BRIEF DESCRIPTION OF THE DRAWINGS

Fig. 1 is a flow diagram of a competition-based resource selection method according to an embodiment of the present disclosure;
Fig. 2(a) is one of diagrams of a Scheduling Assignment (SA) scheduling period according to an embodiment of the present disclosure;
Fig. 2(b) is one of diagrams of an SA scheduling period according to an embodiment of the present disclosure;
Fig. 3 is a first diagram illustrating time-frequency resource selection of a method according to an embodiment of the present disclosure;
Fig. 4 is a second diagram illustrating time-frequency resource selection of a method according to an embodiment of the present disclosure;
Fig. 5 is a third diagram illustrating time-frequency resource selection of a method according to an embodiment of the present disclosure;
Fig. 6(a) is a third diagram illustrating time-frequency resource selection of a method according to an embodiment of the present disclosure;
Fig. 6(b) is a fourth diagram illustrating time-frequency resource selection of a method according to an embodiment of the present disclosure; and
Fig. 7 is a structural diagram illustrating a competition-based resource selection device according to an embodiment of the present disclosure.

### DETAILED DESCRIPTION

Preferred embodiments of the present disclosure are illustrated below in conjunction with the drawings in detail. It will be appreciated that the preferred embodiments illustrated below are only used to illustrate and explain the present disclosure, and are not intended to limit the present disclosure.

### Embodiment 1:

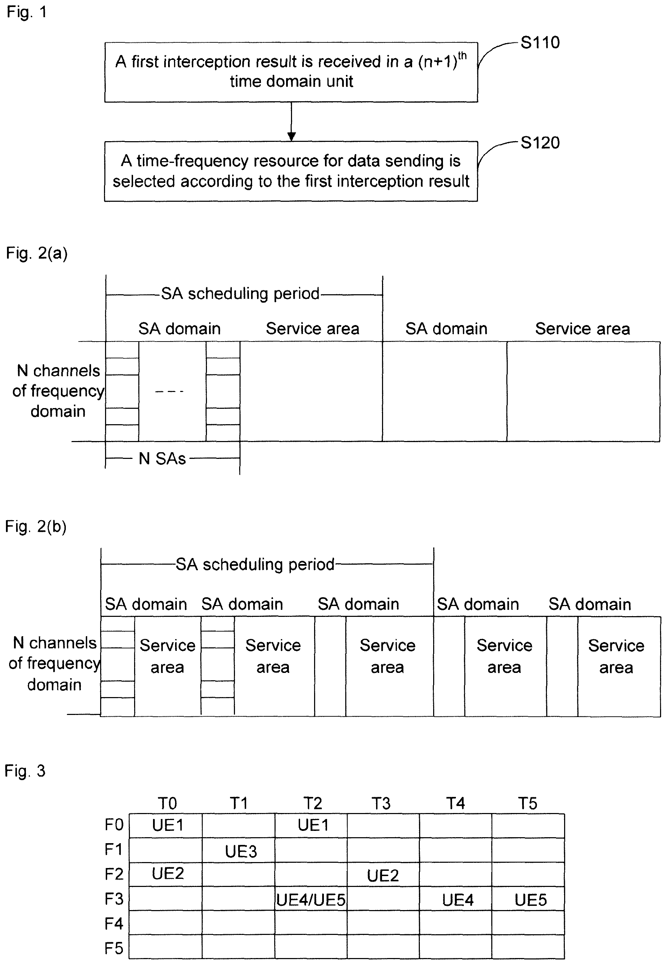

As shown in Fig. 1, the embodiment provides a competition-based resource selection method, which includes the steps as follows.

Step S110: A first interception result is received in a (n+1)^{th} time domain unit, the first interception result at least including channel occupation information and/or collision information in a n^{th} time domain unit.

Step S120: A time-frequency resource for data sending is selected according to the first interception result,
where n is 0 or a positive integer.

Usually, in a half-duplex communication process where interception and sending are sequentially carried out, terminals will carry out interception before sending data. For instance, if it is necessary to send data in a third time domain unit, a terminal A will intercept occupation information and/or collision information about each channel in a second time domain unit, such that competition situations of other terminals in the third time domain unit for each channel are predicted, and the terminal A will avoid competitions as far as possible according to a prediction result so as to select a channel to send data.

However, in the above scenario, the terminal A only intercepts the second time domain unit. A collision phenomenon may occur in a first time domain unit, and data to be sent by two collided terminals probably needs to be resent in the third time domain. Or, a terminal B has occupied a channel A in the first time domain unit, and the terminal B will send data by occupying the channel A in each time domain unit within a certain period until a data packet is completely sent. In this case, only the second time domain unit is intercepted, the terminal A may consider, apparently, the channel A as a vacant channel in the third time domain unit, and therefore the terminal A will compete for the channel A, so that the terminal A and the terminal B will compete for the channel A so as to cause a phenomenon of resource occupation collision, which may cause that data needing to be sent by the terminal A and the terminal B cannot be sent in time.

If both the terminal B and a terminal C send data in the first unit, and they cannot intercept each other, the terminal B and the terminal C will select to intercept in the second unit and can obtain whether they are collided in the first time unit or any other users send data at the same time, thereby selecting to resend data in a scheduling window according to a backoff principle.

The terminal A will receive the first interception result, in the first time domain unit, sent by other terminals in the second time domain unit using the competition-based resource selection method of the embodiment, such that the terminal 2 will obtain the first interception result in the first time domain unit, and will select the time-frequency resource for data sending according to the first interception result. When each channel of the third time domain unit may strongly compete according to the first interception result, time domain backoff can be carried out according to a backoff policy. Fiercely competing channels in the third time domain unit can be predicted according to the first interception result, and a small competition channel is selected as a frequency domain resource for data sending.

In combination with the method provided by the above embodiment, a first interception result which is sent by other terminals and at least includes at least one of channel occupation information and collision information about an n^{th} time domain unit is also received in an (n+1)^{th} time domain unit before data is sent, and the (n+1)^{th} time domain unit is a time domain unit where a terminal starts to intercept, preferably, such that the terminal can obtain more pieces of channel occupation information and collision information, a more accurate prediction result is obtained, a data sending resource can be more reasonably selected, and the advantages of reducing the collision frequency, decreasing the number of times for data resending and improving the timeliness of data sending are provided.

In some embodiments, the method further includes that:
a second interception result is obtained by interception, the second interception result at least including channel occupation information and/or collision information in the (n+1)^{th} time domain unit, wherein
the step that the time-frequency resource for data sending is selected according to the first interception result includes that:
   the time-frequency resource for data sending is selected according to the first interception result and the second interception result.

The terminal will intercept each channel in the (n+1)^{th} time domain unit, so as to form the second interception result.

Thus, in Step S120, the time-frequency resource for data sending will be determined simultaneously according to the first interception result and the second interception result.

The first interception result and the second interception result may each include channel occupation information and collision information about the intercepted time domain units. The channel occupation information and the collision information can be represented by bitmaps, SA domains shown in Fig. 2, specifically. There are N channels in each SA domain. 1 bit can be used to represent two states to indicate whether each channel is occupied, so N channels need N bits. Similarly, 1 bit can be used to represent two states for each channel to indicate whether resource occupation collision occurs. The first interception result and the second interception result are represented simply and clearly using the above bitmaps. An SA period includes SA domains and service areas, each SA corresponding to N channels in a frequency domain. N SA channels included by the SA domains can be continuously or discretely distributed in a time domain. In Fig. 2(a), SA domains of an SA period are continuously distributed in the time domain. In Fig. 2(b), SA domains of an SA period are discretely distributed in the time domain. Herein, start points of SA scheduling periods of a User Equipment (UE) may be identical or different. Contents of the SA information do not greatly vary and thus are repeatedly sent within a scheduling period while may be newly sent out of the scheduling period. The number of times for SA resending is smaller than an SA scheduling window.

In a specific implementation process, the first interception result may include only channel occupation information, or may include only collision information, or may include both channel occupation information and collision information.

A terminal can know whether each channel in the intercepted time domain unit is occupied according to the channel occupation information, thereby knowing which channels have been pre-occupied by other terminals, and predicting which channels will less fiercely compete at next time according to a pre-stored information occupation policy.

A terminal can know the number of resource occupation collisions caused by competition for the same time-frequency resource between different terminals in the intercepted time domain unit according to the collision information, thereby determining whether a certain terminal needs to resend data, and predicting which channels will less fiercely compete according to a data resending policy.

Thus, according to the first interception result and the second interception result, it is beneficial for a terminal to select a small competition time-frequency resource according to a prediction result so as to send data, thereby reducing the fierce degree of competition of terminals for the same time-frequency resource, and reducing phenomena of resending and resource occupation collisions.

In a specific implementation process, preferably, the first interception result and the second interception result are partially different, and the first interception result and the second interception result may intercept more than one (2 or 3) time domain units, the specific number depending on the size of an interception window of a terminal. Furthermore, at least one of time domain units corresponding to the first interception result is located in front of time domain units corresponding to the second interception result. The time domain units may, specifically, be time periods such as one or more sub-frames, one or more time slots or one or more micro-frames.

The method further includes that: after the time-frequency resource for data sending is selected, data is sent using the time-frequency resource selected in Step S120, the data including the second interception result. Usually, the data is resource configuration information or control information, and the second interception result is sent by being carried in the resource configuration information or the control information, thereby making it convenient for other terminals to acquire the second interception result subsequently, and selecting a channel or a time domain unit.

In some embodiments, Step S110 includes that:
the resource configuration information or the control information is received in the (n+1)^{th} time domain unit; and
the first interception result is extracted from the resource configuration information or the control information.

The competition-based resource selection method of the embodiment is applied to selecting and scheduling SA domain resources in an SA domain in a Device to Device (D2D) communication scenario.

Thus, Step S110 may refer to that: when self-intercepting a channel occupation situation and/or collision information in a time domain unit, a terminal which pre-selects a time-frequency resource for data sending also receives a first interception result sent by other terminals; and in the embodiment, the first interception result is carried in resource configuration information or control information and then sent together, so it is necessary to extract the first interception result from the resource configuration information or the control information. The first interception result is carried in the resource configuration information or the control information and then sent and received together, so a first interception result is prevented from being sent by a dedicated time-frequency resource which is additionally created, thereby being highly compatible with the conventional art and being simple and convenient to implement.

Fig. 3 shows a diagram of a time-frequency resource of an SA domain. Fx represents an x^{th} channel of a frequency domain resource, x is a mark of a time domain resource, and a specific value is an integer of 0 to 5, such as, 0^{th} channel F0 and a first channel F1. Ty represents a y^{th} time domain unit of a time domain resource, y is a mark of a frequency domain resource, and a specific value is an integer of 0 to 5, such as, a 0^{th} time domain unit T0 and a first time domain unit T1. In a specific implementation process, time-frequency resources of an SA domain may be continuously-distributed time-frequency resources shown in Fig. 2, or may be time-frequency resources discretely distributed in a frequency domain and/or a time domain.

A terminal UE3, a terminal UE4 and a terminal UE5 which do not send data in a time domain unit T0 can intercept T0 to form a first interception result, the first interception result showing that a terminal UE1 and a terminal UE2 occupy F0 and F2 to send data respectively and a collision phenomenon does not occur in T0.

In order to reduce the power consumption of each terminal, only the terminal UE3 which gets ready for sending data can intercept T0 to form a first interception result.

In a time domain unit T1, the UE3 sends data. In this case, the UE3 sends the first interception result in a broadcast or multicast manner. Meanwhile, the terminal UE1, the terminal UE4 and the terminal UE5 which at least get ready for sending data will self-intercept T1 to form a second interception result, and will receive the first interception result sent by the UE3, such that the UE1, the UE4 and the UE5 will determine to select a channel in a time domain unit T2 according to the first interception result and the second interception result.

In addition, the step that the time-frequency resource for data sending is selected according to the first interception result or the first interception result and the second interception result includes that:
vacant channels in a time domain unit following the (n+1)^{th} time domain unit are predicted according to the first interception result or according to the first interception result and the second interception result; and
a channel is selected for data sending from the vacant channels.

It can be predicted which channels in a subsequent time domain unit or an appointed time domain unit will less fiercely compete according to the first interception result and the second interception result. These channels which less fiercely compete are the vacant channels. In a specific implementation process, the vacant channels are obtained according to the first interception result and the second interception result. By decoding each SA channel, channels which obtain correct decoding are occupied channels, channels which obtain wrong decoding are collided channels or channels with poor channel quality, and channels which do not obtain information are the vacant channels. A terminal preferably selects a vacant channel as a time-frequency resource for data sending, thereby aiding in relieving competitions for the same time-frequency resource between terminals, avoiding too many collision phenomena, reducing data resending, and improving the timeliness of data sending.

Specifically, as shown in Fig. 3, the terminal UE4 and the terminal UE5 know that F0 is previously occupied by the terminal UE1 according to the first interception result, and the same channel will be preferentially occupied within time after a terminal occupies a channel at certain time. So, the terminal UE4 and the terminal UE5 predict that F0 may be occupied by UE1 again and thus competitions for occupying F0 are relatively fierce, and will preferably select a channel from a channel F1 to a channel F5. The channels from F1 to F5 are the vacant channels.

When there are more vacant channels, how a terminal will select a vacant channel to avoid a phenomenon of collision against other terminals caused by random selection is further improved by the, which is specifically shown as follows.

The step that the channel is selected for data sending from the vacant channels includes that:
a selective sequence is formed according to terminal attribute information and/or communication attribute information; and
a channel is selected for data sending from the vacant channels according to the selective sequence.

Different terminals have different terminal attribute information, and communication attribute information about communications between different terminals is different. So, in order to avoid resource occupation collisions caused by the fact that a plurality of terminal adopts a mode of randomly selecting a vacant channel, a time-frequency resource for data sending is determined according to at least one of the terminal attribute information and the communication attribute information in the embodiment, thereby further relieving competitions for the same time-frequency resource between different terminals, and aiding in reduction of collision and resending phenomena.

Specifically, the terminal attribute information includes: one of an IMEI of a terminal and an IMSI of the terminal; and
the communication attribute information includes: a Tx-UE ID, an Rx-UE ID, a group ID (in D2D communication, a plurality of different groups such as a fire control group and a medical group can be divided according to different applications, and the group ID is an information identification number issued by an application layer or may be a pre-defined group ID number), and a subframe number formed during start-up of a terminal or a randomly-formed random sequence.

There are more methods for selecting the channel for data sending from the vacant channels according to the selective sequence. Specifically, for instance, the selective sequence can be converted into a series of values representing size, the values are sorted, and a vacant channel is selected according to a sorting result. Specifically, for instance, the smaller the sorting result is, the smaller the serial number of the selected vacant channel is. Alternatively, the smaller the sorting result is, the larger the serial number of the selected vacant channel is. How to map the sorting result and the vacant channel can be pre-appointed specifically.

A preferred mode is provided below. Specifically, the step that the channel is selected for data sending from the vacant channels according to the selective sequence includes that:
modulus pre-computation is carried out according to the selective sequence and the vacant channels so as to obtain a modulus residual value; and
a vacant channel for data sending is selected according to a mapping relationship between the modulus residual value and the vacant channels.

A specific example for selecting a vacant channel is provided below.
Step A: it is supposed an IMEI of a terminal is M and M is taken as the selective sequence.
Step B: P vacant channels are sorted in a one-dimensional manner, each vacant channel corresponding to a one-dimensional serial number.
Step C: M and P are computed according to the following formulae:
   1) computation of an integer quotient: c=M/P
   2) computation of a remainder: index=M-c*P
Step D: A vacant channel is selected for data sending according to a relationship between the index and the vacant channels.

In a specific implementation process, the total number of the vacant channels can be obtained by counting the vacant channels, or can be obtained by re-sorting the vacant channels.

Step A and Step B are not in order, may be executed simultaneously, or may be executed successively.

In a specific implementation process, parameters corresponding to the vacant channels include channels of frequency domains and further include time domain units of time domains. A time domain unit can be selected according to the selective sequence for the same channel, thereby achieving selection of a vacant channel. Specifically,
Step A1: It is supposed an IMEI of a terminal is M and M is taken as the selective sequence.
Step B1: P vacant channels are sorted, and are sorted in the time domains and the frequency domains respectively. The total number of the time domains corresponding to P channels is p1, and the total number of channels in the frequency channels is S.
Step C1: M and P are computed according to the following formulae:
   1) computation of an integer quotient: c=M/p1; d=M/S
   2) computation of a remainder: index1=M-c*p1; index2=M-d*S
Step D1: A vacant channel is selected for data sending according to relationships between the index1 and the vacant channels and between the index2 and the vacant channels.

The mapping relationship between the modulus residual value and the vacant channels is given in advance. If the vacant channels are re-sorted, one-dimensional serial numbers after re-sorting can be used to indicate the vacant channels. If the modulus residual value is 3 in this case, the modulus residual value corresponds to a vacant channel of which the serial number is 3 after re-sorting. Compare with a mode of randomly selecting one of the vacant channels, a mode of determining and selecting a vacant channel according to the mapping relationship between the modulus residual value and the vacant channels reduces the fierce degree of competitions for the same time-frequency resource between different terminals.

Specifically, there are many modes of selecting a vacant channel and selecting a vacant channel according to a selective sequence, which will not be elaborated herein.

In the embodiment, the step that the time-frequency resource for data sending is selected according to the first interception result and the second interception result includes that:
when collision information in the first interception result or the second interception result shows that a resource occupation collision occurs, the time-frequency resource for data sending is selected according to a backoff policy, the first interception result and the second interception result.

The backoff policy includes at least one of a time domain backoff policy and a frequency domain backoff policy. The time domain backoff policy refers to: delaying a time domain unit for data sending in the case where a selected frequency domain channel is unchanged. The frequency domain backoff policy refers to: selecting other channels to send data in the case where a time domain unit is unchanged.

In the embodiment, at least one of the time domain backoff policy and the frequency domain backoff policy of the backoff policy is selected according to a current resource competition situation. When resource occupation collisions occur, if there are more vacant channels in a subsequent time domain unit, the frequency domain backoff policy can be preferred in this case. If there are fewer vacant channels in a subsequent time domain unit, the time domain backoff policy is preferred. In a specific implementation process, the time domain backoff policy and the frequency domain backoff policy can be used alternatively.

A method for specifically selecting the time-frequency resource for resending according to the backoff policy, the first interception result and the second interception result is specifically provided below.

The step that the time-frequency resource for data sending is selected according to the backoff policy, the first interception result and the second interception result includes that:
a time domain priority is determined according to serial numbers of frequency domain resources subjected to the resource occupation collision;
a time domain resource for sending each piece of data to be resent is determined according to the time domain priority and the size of a time domain backoff window;
   and/or
a frequency domain priority is determined according to an order of time domain resources subjected to the resource occupation collision; and
a frequency domain resource for sending each piece of data to be resent is determined according to the frequency domain priority and the size of a frequency domain backoff window.

The backoff policy is particularly applied to discovery of a resource occupation collision between two or more time-frequency resources according to the first interception result and the second interception result.

In a specific implementation process, the backoff policy is usually configured to select a time-frequency resource for data resending; if a resource occupation collision occurs when data 1 sent by a terminal 1 is sent at the first time, data sending fails, and data needs to be resent. In this case, the terminal 1 will determine that it is necessary to resend data according to collision information in the first interception result and/or the second interception result, and will determine to resend data according to the backoff policy and the interception results.

Other terminals, except the terminal 1, will predict a time-frequency resource at which the terminal 1 will send data, so as to determine respective time-frequency resources for data sending.

As shown in Fig. 3, in a second time domain unit T2, a UE4 and a UE5 compete for the same channel F3 to cause a resource occupation collision phenomenon. In this case, terminals UE2 and UE3 which do not send data perform interception to form a first interception result. For the purpose of reducing the power consumption of terminals, a device interested in D2D sending/receiving, such as the UE2, will monitor in a unit T3.

Thus, when sending data in the third time domain unit, the UE2 will also send a first interception result, wherein the first interception result includes collision information representing that a resource occupation collision phenomenon between the UE4 and the UE5 occurs. The UE4 and the UE5 getting ready for sending data intercept T3 in this case so as to form a second interception result.

The UE4 will know that data sent in T2 is not successfully sent according to the first interception result, and it is necessary to resend data. If a pre-stored backoff policy of the UE4 is a time domain backoff policy and the size of a backoff window of the time domain backoff policy is 0, the UE4 will resend data over a third channel F3 of a time domain unit T4.

The UE5 will know that data sent in T2 is not successfully sent according to the first interception result, and it is necessary to resend data. If a pre-stored backoff policy of the UE5 is a time domain backoff policy and the size of a backoff window of the time domain backoff policy is 1, the UE5 will resend data over a third channel F3 of a time domain unit T5.

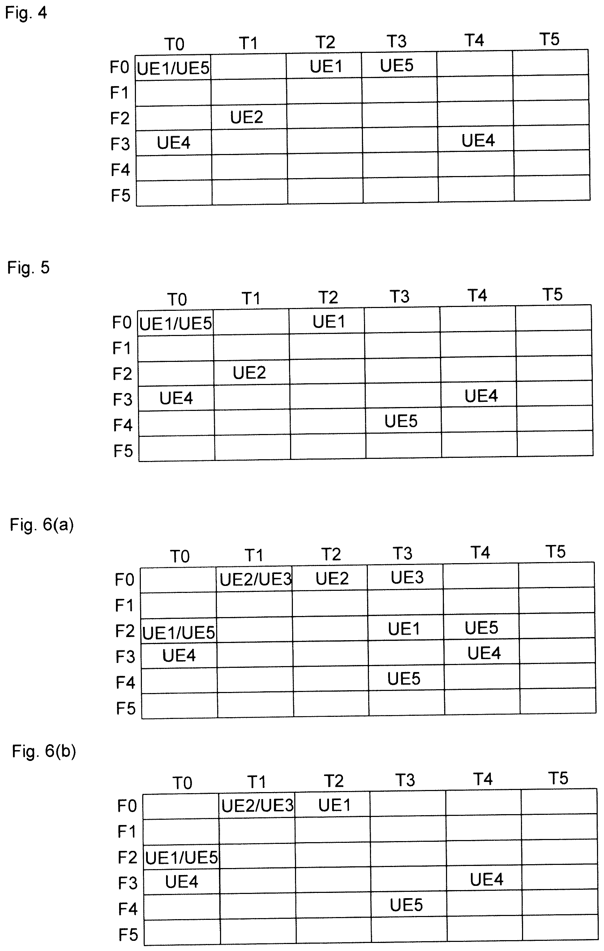

As shown in Fig. 4, a resource occupation collision occurs between the UE1 and the UE5 on a time domain unit T0; the UE2 carries out interception on T0 to form a first interception result; when resource configuration information or control information is sent on T1, the first interception result is sent together; in this case, the UE1 and the UE5 which do not send data can know that the resource occupation collision occurs over F0 of T0 by receiving the first interception result sent by the UE2, and data is not successfully sent; and in this case, it is necessary to resend data which is prepared to be sent by means of time-frequency resources T0 and F0 previously by the UE1 and the UE5.

In this case, the UE1 and the UE5 adopt a time backoff policy, respectively. The UE1 will resend data over F0 of T2 according to the first interception result and the time backoff policy. The UE5 will resend data over F0 of T3 according to the first interception result and the time backoff policy.

As shown in Fig. 5, a resource occupation collision occurs between the UE1 and the UE5 on a time-frequency resource F0 of T0; in this case, the terminal UE2 which does not send data intercepts the time domain unit T0 to form a first interception result; and when sending resource configuration information or control information on T1, the UE2 will also synchronously send the first interception result. The UE1, the UE3, the UE4 and the UE5 which do not send data receive information sent by the UE2 and also intercept T1. The terminal UE1 discovers, by means of the received first interception result, that the data sent over the time-frequency resource F0 of T0 is not successfully sent due to the resource occupation collision and needs to be resent. In this case, the UE1 resends data preferentially, and selects a time-frequency resource F0 of T2 to resend data.

The terminal UE5 discovers according to the first interception result that the data sent over the time-frequency resource F0 of T0 is not successfully sent, so the UE5 preferentially sends data to be resent. According to the first interception result, in order to avoid the resource occupation collision against the UE1 again, a mode of combining a time domain backoff policy and a frequency domain backoff policy is adopted, and a time-frequency resource F4 of T3 is selected to resend data.

As shown in Fig. 6(a), a resource occupation collision between the terminal UE1 and the terminal UE5 occurs on a time-frequency resource F2 of T0; and a resource occupation collision between the terminal UE2 and the terminal UE3 occurs on a time-frequency resource F0 of T1. In this case, the step that the time-frequency resource for data sending is selected according to the backoff policy, the first interception result and the second interception result includes that: a time domain priority is determined according to serial numbers of frequency domain resources subjected to the resource occupation collision; and a time domain resource for sending each piece of data to be resent is determined according to the time domain priority and the size of a time domain backoff window. The smaller the serial numbers of the frequency domain resources are, the higher the time domain priority is. The time domain priorities of the UE2 and the UE3 will be higher than those of the UE1 and the UE5. In the case of shortage of the time domain resources, even if the resource occupation collision between the UE2 and the UE3 occurs firstly, the resources will be preferentially allocated to the UE2 and the UE3. The specific distribution is shown in Fig. 6(a). It is supposed that only one channel in T2 is a vacant channel, the UE1, the UE2, the UE3 and the UE5 waits for allocating time-frequency resources. Since the time domain priorities of the UE2 and the UE3 are high, the vacant channel is preferentially allocated to the UE2 and the UE3. In this case, if a time domain backoff window of the UE2 is 0 and a time domain backoff window of the UE3 is 1, the vacant channel in T2 is allocated to the UE2.

As shown in Fig. 6(a), a resource occupation collision between the terminal UE1 and the terminal UE5 occurs on a time-frequency resource F2 of T0; and a resource occupation collision between the terminal UE2 and the terminal UE3 occurs on a time-frequency resource F0 of T1. In this case, the step that the time-frequency resource for data sending is selected according to the backoff policy, the first interception result and the second interception result includes that: a frequency domain priority is determined according to an order of time domain resources subjected to the resource occupation collision; and a frequency domain resource for sending each piece of data to be resent is determined according to the frequency domain priority and the size of a frequency domain backoff window. The earlier the time corresponding to the time domain unit is, the higher the frequency domain priority is. The frequency domain priorities of the UE2 and the UE3 will be lower than those of the UE1 and the UE5. In the case of shortage of the frequency domain resources, the resources will be preferentially allocated to the UE1 and the UE5. As shown in Fig. 6(b), the resources are preferentially allocated to the UE1.

In a specific implementation process, a situation where no terminal device sends resource configuration information and control information in a time domain unit may occur. In this case, a terminal intercepting may not receive a first interception result, and therefore the terminal can still select a time-frequency resource for data sending according to the backoff principle of the embodiment and a vacant channel selection method. In the embodiments of the present disclosure, sending data includes resending data, newly sending data and sending data again.

In conclusion, the embodiment provides a competition-based resource selection method. On one hand, a terminal not only intercepts channel occupation information and/or collision information about a time domain unit by itself, but also receives interception results sent by other terminals, such that more pieces of channel occupation information and/or collision information can be obtained, channel vacancy information can be accurately predicted, and a resource occupation collision phenomenon is reduced. On the other hand, the number of the time domain units self-intercepted by the terminal can be decreased by receiving the interception results sent by the other terminals, such that the power consumption can be reduced.

### Embodiment 2:

The embodiment provides a competition-based resource selection method, which includes that:
a time domain priority of each piece of data to be resent is determined according to serial numbers of frequency domain resources previously occupied by the data to be resent;
a time domain resource for sending each piece of data to be resent is determined according to the time domain priority and the size of a time domain backoff window;
   or
a frequency domain priority of each piece of data to be resent is determined according to serial numbers of time domain resources previously occupied by the resent data; and a frequency domain resource for sending each piece of data to be resent is determined according to the frequency domain priority and the size of a frequency domain backoff window.

The method of the embodiment can be applied to data resending, which specifically includes that: by means of an own interception result or interception results from other terminals, a sending terminal knows time-frequency resource selection for data resending in resource occupation collisions when data is previously sent. Meanwhile, data can be automatically resent when the terminal does not obtain the interception result. During data resending in the embodiment, data will be no longer sent by randomly selecting a time-frequency resource. Instead, the priority of a time domain or a frequency domain is determined firstly, and then a time-frequency resource is determined according to the determined priority. Compared with random selection, this mode can apparently reduce the probability of competitions for the same resource occupation between different terminals.

In the embodiment, how to back off specifically can refer to the corresponding part in the embodiment 1.

### Embodiment 3:

The embodiment provides a competition-based resource selection method, which includes the following steps.
Step 1: Vacant channels are determined;
Step 2: A selective sequence is acquired; and
Step 3: A vacant channel is selected according to the selective sequence.

The vacant channels can be determined according to an interception result in Step 1. The interception result can be intercepted by a terminal itself or can be received from other terminals or can simultaneously include interception results which are received from other terminals and intercepted by itself.

In the embodiment, a method for sending data by randomly selecting a channel after determining vacant channels in the conventional methods is changed. Firstly, a selective sequence is acquired, a vacant channel for data sending is determined according to the selective sequence, different terminals obtain different selective sequences, and different terminals will occupy different pieces of vacant information. Thus, the fierce degree of competitions for the same time-frequency resource between terminals is reduced, such that collision and resending phenomena can be reduced.

In some embodiments, acquiring the selective sequence refers to: forming the selective sequence according to terminal attribute information and/or communication attribute information, wherein the terminal attribute information includes: an IMEI of a terminal and an IMSI of the terminal; and the communication attribute information includes: a Tx-UE ID, an Rx-UE ID, a group ID, and a subframe number formed during start-up of a terminal or a randomly-formed random sequence.

There are many methods for specifically determining a vacant resource for data sending according to a selective sequence. A preferred method is specifically provided below.

The step that the vacant channel is selected according to the selective sequence includes that:
modulus pre-computation is carried out according to the selective sequence and the vacant channels so as to obtain a modulus residual value; and
a vacant channel for data sending is selected according to a mapping relationship between the modulus residual value and the vacant channels.

How to carry out modulus pre-computation specifically can refer to the corresponding part in the embodiment 1.

In conclusion, a method for selecting a vacant channel from a plurality of vacant channels to send data is provided herein, thereby changing a phenomenon of high collision probability caused by competitions for the same vacant channel between different terminals due to random selection of a vacant channel from a plurality of vacant channels in the conventional art.

### Embodiment 4:

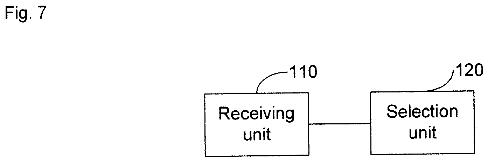

As shown in Fig. 7, the embodiment provides a competition-based resource selection device, which includes:
a receiving unit 110, configured to receive a first interception result in a (n+1)^{th} time domain unit, the first interception result at least including channel occupation information and/or collision information in a n^{th} time domain unit; and
a selection unit 120, configured to select a time-frequency resource for data sending according to the first interception result,
where n is 0 or a positive integer.

A specific structure of the receiving unit 110 may be a receiving interface such as a receiving antenna or a receiving antenna array.

A specific structure of the selection unit 120 may be a processor and a storage medium. The storage medium stores executable instructions thereon. When executing the executable instructions, the processor can select the time-frequency resource for data sending according to the first interception result. The storage medium is a non-transient storage medium such as a Read-Only Memory (ROM), preferably. The processor may be an electronic component having a processing function such as a Central Processing Unit (CPU), a micro processor, a Digital Signal Processor (DSP) or a programmable logic array.

In some embodiments, the device further includes:
an interception unit, configured to obtain a second interception result by interception, the second interception result at least including channel occupation information and/or collision information in the (n+1)^{th} time domain unit, wherein
the selection unit 120 is specifically configured to select the time-frequency resource for data sending according to the first interception result and the second interception result.

A device interested in D2D sending/receiving will monitor an SA domain channel in the interception unit.

Each channel is intercepted in an intercepted time domain unit. It is judged whether the channel is occupied and the channel sends a resource occupation collision according to information obtained from each channel. It can be specifically judged whether a collision occurs by means of resource configuration information obtained in a decoding interception process. If decoding fails, the resource occupation collision may occur. It is judged whether the channel is occupied by means of a decoding result of the resource configuration information. A specific structure of the interception unit may include structures such as a receiving interface and a decoder connected to the receiving interface.

In some embodiments, the device further includes:
a sending unit, configured to send data using the time-frequency resource,
wherein the data includes the second interception result.

A specific structure of the sending unit may include a communication interface such as a sending antenna. The second interception result is preferably sent by being carried in the resource configuration information or control information. Thus, a time-frequency resource which specially sends the second interception result may not be re-allocated, thereby making it simple and convenient to implement.

In the embodiment, the receiving unit is further configured to: receive the resource configuration information or the control information in the (n+1)^{th} time domain unit; and extract the first interception result from the resource configuration information or the control information.

While receiving the resource configuration information or the control information, the device of the embodiment receives the first interception result. Compared with a mode of receiving the resource configuration information or the control information and the first interception result by a terminal respectively, this mode reduces the power consumption and makes it simple and convenient to implement.

In some examples, the selection unit 120 is configured to: predict vacant channels in a time domain unit following the (n+1)^{th} time domain unit according to the first interception result or according to the first interception result and the second interception result; and select a channel for data sending from the vacant channels.

The selection unit 120 is configured to: form a selective sequence according to terminal attribute information and/or communication attribute information; and select a channel for data sending from the vacant channels according to the selective sequence.

Herein, the terminal attribute information includes: an IMEI of a terminal and an IMSI of the terminal; and the communication attribute information may include: a Tx-UE ID, an Rx-UE ID, a group ID, and a subframe number formed during start-up of the terminal or a randomly-formed random sequence.

In addition, the selection unit 120 includes:
a computation module, configured to carry out modulus pre-computation according to the selective sequence and the vacant channels so as to obtain a modulus residual value; and
a selection module, configured to select a vacant channel for data sending according to a mapping relationship between the modulus residual value and the vacant channels.

A specific structure of the computation module may include an electronic component such as a computer or a processor having a computation function. The selection module may be a processor having a selection function.

Specifically, the selection unit 120 is specifically configured to select, when collision information in the first interception result or the second interception result shows that a resource occupation collision occurs, the time-frequency resource for data sending according to a backoff policy, the first interception result and the second interception result.

The selection unit 120 selects the time-frequency resource for data sending according to the backoff policy, the first interception result and the second interception result by means of the following two modes.

### Mode 1:

The selection unit is configured to: determine a time domain priority according to serial numbers of frequency domain resources subjected to the resource occupation collision; determine a time domain resource for respective data sending according to the time domain priority and the size of a time domain backoff window; and if it is known that resource occupation is larger than the time domain backoff window, occupied resources are segmented according to the size of the time domain window in accordance with a time domain priority principle.

### Mode 2:

The selection unit is configured to: determine a frequency domain priority according to an order of time domain resources subjected to the resource occupation collision; and determine a frequency domain resource for respective data sending according to the frequency domain priority and the size of a frequency domain backoff window.

In a specific implementation process, the mode 1 and the mode 2 can be used in conjunction. Specifically, the mode 1 and the mode 2 are used alternatively.

In conclusion, the device of the embodiment provides hardware support for the method in the embodiment 1, can be configured to implement any technical solutions in the embodiment 1, and has the advantages that the probabilities of resource occupation collision and resending can be reduced and the data sending delay is reduced. Specifically, the device of the embodiment may be a terminal applicable to D2D communication such as a smart phone and a tablet computer specifically.

### Embodiment 5:

The embodiment provides a competition-based resource selection device, which includes:
a first determination unit, configured to determine a time domain priority of each piece of data to be resent according to serial numbers of frequency domain resources previously occupied by the data to be resent; and a second determination unit, configured to determine a time domain resource for sending each piece of data to be resent according to the time domain priority and the size of a time domain backoff window, or determine a frequency domain resource for sending each piece of data to be resent according to the frequency domain priority and the size of a frequency domain backoff window,
   or wherein,
the first determination unit is configured to determine a frequency domain priority of each piece of data to be resent according to serial numbers of time domain resources previously occupied by the data to be resent; and
the second determination unit is configured to determine the frequency domain resource for sending each piece of data to be resent according to the frequency domain priority and the size of the frequency domain backoff window.

Specific structures of the first determination unit and the second determination unit may be a processor and a storage medium, respectively. The storage medium stores executable instructions thereon. The processor executes the executable instructions to complete a corresponding function. The storage medium is a non-transient storage medium such as an ROM, preferably. The processor may be an electronic component having a processing function such as a CPU, a micro processor, a DSP or a programmable logic array. The first determination unit and the second determination unit may correspond to different processors respectively or may integrally correspond to the same processor. When the first determination unit and the second determination unit correspond to the same processor, functions of the first determination unit and the second determination unit are implemented by time division multiplexing or different threads respectively.

In conclusion, the embodiment provides hardware support for the method in the embodiment 2, and can be configured to implement any technical solutions in the embodiment 2. Specifically, the device of the embodiment may be a terminal applicable to D2D communication such as a smart phone and a tablet computer specifically.

### Embodiment 6:

The embodiment provides a competition-based resource selection device, which includes:
a third determination unit, configured to determine vacant channels;
an acquisition unit, configured to acquire a selective sequence; and
a fourth determination unit, configured to select a vacant channel according to the selective sequence.

Specific structures of the third determination unit, the acquisition unit and the fourth determination unit may be a processor and a storage medium, respectively. The storage medium stores executable instructions thereon. The processor executes the executable instructions to complete a corresponding function. The storage medium is a non-transient storage medium such as an ROM, preferably. The processor may be an electronic component having a processing function such as a CPU, a micro processor, a DSP or a programmable logic array. The third determination unit, the acquisition unit and the second determination unit may correspond to different processors respectively or may integrally correspond to the same processor. When the first determination unit and the second determination unit correspond to the same processor, functions of the first determination unit and the second determination unit are implemented by time division multiplexing or different threads respectively.

In some examples, the acquisition unit is configured to form the selective sequence according to terminal attribute information and/or communication attribute information, wherein the terminal attribute information includes: an IMEI of a terminal and an IMSI of the terminal; and the communication attribute information includes: a Tx-UE ID, an Rx-UE ID, a group ID, and a subframe number formed during start-up of the terminal or a randomly-formed random sequence.

In addition, the fourth determination unit is configured to: carry out modulus pre-computation according to the selective sequence and the vacant channels so as to obtain a modulus residual value; and select a vacant channel for data sending according to a mapping relationship between the modulus residual value and the vacant channels.

In conclusion, the embodiment provides hardware support for the method in the embodiment 3, and can be configured to implement any technical solutions in the embodiment 3. Specifically, the device of the embodiment may be a terminal applicable to D2D communication such as a smart phone and a tablet computer specifically.

A computer storage medium is also provided in the embodiments of the present disclosure. The computer storage medium stores computer executable instructions configured to execute at least one of the methods provided according to the embodiments of the present disclosure such as the method shown in Fig. 1.

The computer storage medium may include various media capable of storing program codes such as an ROM, a Random Access Memory (RAM), a magnetic disc or an optical disc. The computer storage medium is a non-transient storage medium.

The processor in the embodiments of the present disclosure may be an electronic component having a data processing function such as an Application Processor (AP), a CPU, a DSP or a Field-Programmable Gate Array (FPGA).

The above is only the preferred embodiments of the present disclosure and is not intended to limit the protective scope of the present disclosure. Modifications made according to the principle of the present disclosure shall be interpreted as falling within the protective scope of the present disclosure.

## Claims

1. A competition-based resource selection method, comprising:
receiving a first interception result in a (n+1)^{th} time domain unit, the first interception result at least comprising channel occupation information and/or collision information in a n^{th} time domain unit; and
selecting a time-frequency resource for data sending according to the first interception result,
wherein n is 0 or a positive integer.

2. The method according to claim 1, further comprising:
obtaining a second interception result by interception, the second interception result at least comprising channel occupation information and/or collision information in the (n+1)^{th} time domain unit, wherein
selecting the time-frequency resource for data sending according to the first interception result comprises:
selecting the time-frequency resource for data sending according to the first interception result and the second interception result.

3. The method according to claim 2, further comprising:
sending data using the time-frequency resource,
wherein the data comprises the second interception result.

4. The method according to any one of claims 1, 2 and 3, wherein receiving the first interception result in the (n+1)^{th} time domain unit comprises:
receiving resource configuration information and control information in the (n+1)^{th} time domain unit; and
extracting the first interception result from the resource configuration information and the control information.

5. The method according to claim 2 or 3, wherein
selecting the time-frequency resource for data sending according to the first interception result or according to the first interception result and the second interception result comprises:
predicting vacant channels in a time domain unit following the (n+1)^{th} time domain unit according to the first interception result or according to the first interception result and the second interception result; and
selecting a channel for data sending from the vacant channels.

6. The method according to claim 5, wherein
selecting the channel for data sending from the vacant channels comprises:
forming a selective sequence according to terminal attribute information and/or communication attribute information; and
selecting a channel for data sending from the vacant channels according to the selective sequence.

7. The method according to claim 6, wherein
the terminal attribute information comprises: an International Mobile Equipment Identity (IMEI) of a terminal and an International Mobile Subscriber Identity (IMSI) of the terminal; and
the communication attribute information comprises: a Transmit Terminal Identity (Tx-UE ID), a Receive Terminal Identity (Rx-UE ID), a group ID, and a subframe number formed during start-up of a terminal or a randomly-formed random sequence.

8. The method according to claim 6, wherein selecting the channel for data sending from the vacant channels according to the selective sequence comprises:
carrying out modulus pre-computation according to the selective sequence and the vacant channels so as to obtain a modulus residual value; and
selecting a vacant channel for data sending according to a mapping relationship between the modulus residual value and the vacant channels.

9. The method according to any one of claims 1, 2 and 3, wherein
selecting the time-frequency resource for data sending according to the first interception result and the second interception result comprises:
selecting, when collision information in the first interception result or the second interception result shows that a resource occupation collision occurs, the time-frequency resource for data sending according to a backoff policy, the first interception result and the second interception result.

10. The method according to claim 9, wherein
selecting the time-frequency resource for data sending according to the backoff policy, the first interception result and the second interception result comprises:
determining a time domain priority according to serial numbers of frequency domain resources subjected to the resource occupation collision;
determining a time domain resource for respective data sending according to the time domain priority and a size of a time domain backoff window;
and/or
determining a frequency domain priority according to an order of time domain resources subjected to the resource occupation collision; and
determining a frequency domain resource for respective data sending according to the frequency domain priority and a size of a frequency domain backoff window.

11. A competition-based resource selection method, comprising:
determining a time domain priority of each piece of data to be resent according to serial numbers of frequency domain resources previously occupied by the data to be resent; and
determining a time domain resource for sending each piece of data to be resent according to the time domain priority and a size of a time domain backoff window;
or
determining a frequency domain priority of each piece of data to be resent according to an order of time domain resources previously occupied by the data to be resent;
determining a frequency domain resource for sending each piece of data to be resent according to the frequency domain priority and a size of a frequency domain backoff window.

12. A competition-based resource selection method, comprising:
determining vacant channels;
acquiring a selective sequence; and
selecting a vacant channel according to the selective sequence.

13. The method according to claim 12, wherein acquiring the selective sequence comprising:
forming the selective sequence according to terminal attribute information and/or communication attribute information.

14. The method according to claim 13, wherein
the terminal attribute information comprises: an International Mobile Equipment Identity (IMEI) of a terminal and an International Mobile Subscriber Identity (IMSI) of the terminal; and
the communication attribute information comprises: a Transmit Terminal Identity (Tx-UE ID), a Receive Terminal Identity (Rx-UE ID), a group ID, and a subframe number formed during start-up of a terminal or a randomly-formed random sequence.

15. The method according to any one of claims 12, 13 and 14, wherein selecting the vacant channel according to the selective sequence comprises:
carrying out modulus pre-computation according to the selective sequence and the vacant channels so as to obtain a modulus residual value; and
selecting a vacant channel for data sending according to a mapping relationship between the modulus residual value and the vacant channels.

16. A competition-based resource selection device, comprising:
a receiving unit, configured to receive a first interception result in a (n+1)^{th} time domain unit, the first interception result at least comprising channel occupation information and/or collision information in a n^{th} time domain unit; and
a selection unit, configured to select a time-frequency resource for data sending according to the first interception result,
wherein n is 0 or a positive integer.

17. The device according to claim 16, further comprising:
an interception unit, configured to obtain a second interception result by interception, the second interception result at least comprising channel occupation information and/or collision information in the (n+1)^{th} time domain unit, wherein
the selection unit is further configured to select the time-frequency resource for data sending according to the first interception result and the second interception result.

18. The device according to claim 17, further comprising:
a sending unit, configured to send data using the time-frequency resource,
wherein the data comprises the second interception result.

19. The device according to any one of claims 16, 17 and 18, wherein
the receiving unit is configured to: receive resource configuration information or control information in the (n+1)^{th} time domain unit; and extract the first interception result from the resource configuration information or the control information.

20. The device according to claim 17 or 18, wherein
the selection unit is configured to: predict vacant channels in a time domain unit following the (n+1)^{th} time domain unit according to the first interception result or according to the first interception result and the second interception result; and select a channel for data sending from the vacant channels.

21. The device according to claim 20, wherein
the selection unit is configured to: form a selective sequence according to terminal attribute information and/or communication attribute information; and select a channel for data sending from the vacant channels according to the selective sequence.

22. The device according to claim 21, wherein
the terminal attribute information comprises: an International Mobile Equipment Identity (IMEI) of a terminal and an International Mobile Subscriber Identity (IMSI) of the terminal; and
the communication attribute information comprises: a Transmit Terminal Identity (Tx-UE ID), a Receive Terminal Identity (Rx-UE ID), a group ID, and a subframe number formed during start-up of a terminal or a randomly-formed random sequence.

23. The device according to claim 21, wherein the selection unit comprises:
a computation module, configured to carry out modulus pre-computation according to the selective sequence and the vacant channels so as to obtain a modulus residual value; and
a selection module, configured to select a vacant channel for data sending according to a mapping relationship between the modulus residual value and the vacant channels.

24. The device according to any one of claims 16, 17 and 18, wherein
the selection unit is further configured to select, when collision information in the first interception result or the second interception result shows that a resource occupation collision occurs, the time-frequency resource for data sending according to a backoff policy, the first interception result and the second interception result.

25. The device according to claim 24, wherein
the selection unit is configured to: determine a time domain priority according to serial numbers of frequency domain resources subjected to the resource occupation collision; and determine a time domain resource for respective data sending according to the time domain priority and a size of a time domain backoff window;
and/or
determine a frequency domain priority according to an order of time domain resources subjected to the resource occupation collision; and
determine a frequency domain resource for respective data sending according to the frequency domain priority and a size of a frequency domain backoff window.

26. A competition-based resource selection device, comprising:
a first determination unit, configured to determine a time domain priority of each piece of data to be resent according to serial numbers of frequency domain resources previously occupied by the data to be resent, or determine a frequency domain priority of each piece of data to be resent according to an order of time domain resources previously occupied by the data to be resent; and
a second determination unit, configured to determine a time domain resource for sending each piece of data to be resent according to the time domain priority and a size of a time domain backoff window, or determine a frequency domain resource for sending each piece of data to be resent according to the frequency domain priority and a size of a frequency domain backoff window.

27. A competition-based resource selection device, comprising:
a third determination unit, configured to determine vacant channels;
an acquisition unit, configured to acquire a selective sequence; and
a fourth determination unit, configured to select a vacant channel according to the selective sequence.

28. The device according to claim 27, wherein
the acquisition unit is configured to form the selective sequence according to terminal attribute information and/or communication attribute information.

29. The device according to claim 27, wherein
the terminal attribute information comprises: an International Mobile Equipment Identity (IMEI) of a terminal and an International Mobile Subscriber Identity (IMSI) of the terminal; and
the communication attribute information comprises: a Transmit Terminal Identity (Tx-UE ID), a Receive Terminal Identity (Rx-UE ID), a group ID, and a subframe number formed during start-up of a terminal or a randomly-formed random sequence.

30. The device according to any one of claims 27, 28 and 29, wherein the fourth determination unit is further configured to: carry out modulus pre-computation according to the selective sequence and the vacant channels so as to obtain a modulus residual value; and select a vacant channel for data sending according to a mapping relationship between the modulus residual value and the vacant channels.

31. A computer storage medium, having computer executable instructions stored therein, wherein the computer executable instructions are configured to execute the method according to any one of claims 1 to 15.
